# FASCICULE DE BREVET EUROPEEN

(11) **EP 2 931 443 B1**
(45) Date de publication et mention de la délivrance du brevet: **09.08.2017**
(21) Numéro de dépôt: 13803177.8
(22) Date de dépôt: 26.11.2013
(51) Int. Cl.: B09B 3/00, B03B 9/06, H01J 9/52

(54) **PROCÉDÉ DE DÉCOUPE À FROID D'UNE LAMPE**
VERFAHREN ZUM KALTSCHNEIDEN EINER LAMPE
METHOD FOR COLD-CUTTING A LAMP

(30) Priorité: 11.12.2012 FR 1261866
(43) Date de publication de la demande: 21.10.2015
(73) Titulaire: VEOLIA PROPRETE, 75008 Paris (FR); Triade Electronique, 92000 Nanterre (FR)
(72) Inventeur: SANGLIER, Christophe, F-92700 Colombes (FR); MAITROT, Aude, 92000 Nanterre (FR); GAUTREAU, James, F-49190 Denée (FR)
(74) Mandataire: Novagraaf Technologies
(86) Numéro de dépôt international: PCT/FR2013/052854
(87) Numéro de publication internationale: WO 2014/091108

(56) Documents cités:
- EP-A2- 0 949 016
- EP-A2- 2 453 460
- WO-A1-2012/150422

## Description

### Domaine technique

La présente invention concerne le domaine de la dépollution des cathodes froides.

Une cathode froide est un tube électronique, tube à vide ou tube à gaz, comprenant une enveloppe généralement en verre ou en céramique et dans laquelle la pression est inférieure à la pression atmosphérique ; et au moins un connecteur, solidaire de l'enveloppe, et comprenant typiquement des électrodes et un culot ou une douille.

Par souci de concision, on ne citera ici qu'un seul exemple, celui d'un tube CCFL de rétroéclairage dans le cadre du démantèlement d'un écran plat, en particulier LCD, en fin de vie. Cependant, l'invention peut être applicable plus généralement à toute lampe fluorescente ou néon.

Par convention, une cathode froide est dénommée ci-après « lampe ».

### Problème technique

Le problème des cathodes froides est qu'elles comprennent des matériaux polluant, par exemple le mercure, qui est un déchet dangereux et doit faire l'objet d'un traitement spécifique pour ne pas être relâché dans l'atmosphère.

### Etat de la technique

Pour traiter un écran plat en fin vie, il existe à ce jour trois grands types de démantèlement :
- Les solutions de broyage avec traitement de dépollution des vapeurs et éléments broyés.

Toutefois, ces solutions nécessitent des traitements lourds et coûteux.
- Les solutions de démantèlement entièrement manuelles, où des opérateurs démantèlent les écrans avec des outils et équipements plus ou moins ergonomiques.

Toutefois, ces solutions sont très longues, manuelles et économiquement non viables.
- Les solutions automatisées ou semi-automatisées faisant appel à des technologies assurant le démantèlement sans pollution de l'écran (c'est-à-dire pas de casse de la dalle, en particulier LCD, ou des lampes).

Un mode de réalisation de l'invention concerne ce type de solutions.

Dans ce contexte, les solutions existantes visent essentiellement à conserver l'intégrité des lampes, ce qui peut nécessiter de donner accès aux connecteurs reliant les lampes à l'écran, comme décrit par exemple dans la demande FR2974937.

D'autres techniques de découpe à chaud visent à porter atteinte à l'atteinte des lampes, comme décrit par exemple également dans la demande FR2974937 sous forme de pincement thermique. Il existe également une technique consistant à faire fondre le verre de la lampe, comme décrit par exemple dans la demande WO2012150422, particulièrement avantageuse notamment lorsque les connecteurs reliant les lampes à l'écran ne sont pas, peu ou difficilement accessibles.

D'autres procédés actuellement utilisés, tels que ceux décrits dans les références brevets EP2453460 et EP0949016, mettent oeuvre une découpe à froid. En particulier, ces procédés utilisent des liquides spécifiques qui permettent d'enlever ou transformer les polluants initialement compris dans la lampe.

### Résumé de l'invention

La présente invention est une alternative à cette dernière technique, et présente par rapport à cette dernière un bilan thermique inférieur.

Plus précisément, l'invention concerne un procédé de découpe à froid d'une lampe (21) dont la pression interne est inférieure à la pression atmosphérique, comprenant une enveloppe, au moins un connecteur solidaire de l'enveloppe, et renfermant un polluant,

Le procédé comprenant des étapes consistant à :
- Maintenir la lampe dans une position de découpe prédéterminée, et
- Découper (120) l'enveloppe en au moins un point de coupe (26A, 26B), et créer un premier morceau (211) et un deuxième morceau (212) de part et d'autre de chaque point de coupe.
- Préalablement à l'étape de découpe, immerger (110) le point de coupe (26A, 26B) dans une composition liquide ou pâteuse,
- Maintenir le point de coupe immergé dans la composition liquide ou pâteuse pendant l'étape de découpe, et
- Aspirer (130) une partie de la composition liquide ou pâteuse dans chaque morceau (211, 212, 213).

Il est essentiellement caractérisé en ce que :
- la composition liquide ou pâteuse est une composition rhéoépaississante (22) dont la température, préalablement à l'étape de découpe, est supérieure ou égale à son point d'écoulement,
le précédé étant caractérisé en ce qu'il comprend en outre une étape consistant à :
- Ultérieurement à l'étape de découpe, diminuer la température de la composition rhéoépaississante (140) jusqu'à une température inférieure à son point d'écoulement, de sorte à augmenter sa viscosité et créer un bouchon étanche au polluant.

De préférence, on prévoit en outre une étape (160) consistant à séparer le premier morceau (26A) du deuxième morceau (26B).

Ainsi, chaque morceau peut être traité individuellement.

En particulier dans le cadre du démantèlement d'un écran plat en fin de vie, on peut prévoir que la lampe est découpée en deux points de coupe de sorte à créer une partie centrale de la lampe et deux parties extrêmes, le procédé comprenant en outre, après l'étape de découpe en deux points de coupe, une étape consistant à retirer la partie centrale.

Ce qui simplifie d'une part le retrait des lampes par rapport aux plaquettes des écrans et des connecteurs ; et d'autre part, ce qui simplifie le traitement de l'écran puisque l'on peut alors très simplement découper le cadre sans risquer de casser les lampes.

Dans un mode de réalisation, on peut prévoir justement que la lampe (21) est une lampe de rétroéclairage d'un écran plat (20) en fin de vie, la lampe (21) étant solidaire de l'écran par l'intermédiaire de connecteurs (24A, 24B), le procédé comprenant, après retrait de la partie centrale, une étape consistant à découper l'écran en une pluralité de points de coupe (51, 52, 53, 54).

Dans un mode de réalisation, on peut prévoir en outre une étape (150) consistant à mettre rotation la partie centrale de la lampe (212) autour de son axe d'élongation.

Ce qui permet en particulier lorsque la viscosité de la composition rhéoépaississante a augmenté par rapport à sa viscosité lors de la découpe, que la composition rhéoépaississante ne subisse pas d'effort dans le sens d'élongation de la lampe, c'est-à-dire que le retrait d'un morceau, en particulier de la partie centrale, ne risque pas de retirer la composition rhéoépaississante de l'intérieur de l'enveloppe, c'est-à-dire le bouchon.

Dans un mode de réalisation, on prévoit en outre une étape (90) consistant à obtenir la topographie tridimensionnelle d'une partie au moins des lampes.

Ce qui permet par exemple de définir automatiquement les points de coupe, c'est-à-dire tant leurs coordonnées que leur profondeur.

Dans un mode de réalisation, on prévoit avant l'étape (120) de découpe de l'enveloppe, une étape (100) consistant à couler, injecter ou mouler la composition rhéoépaississante dans un moule.

Ce qui permet par exemple de pouvoir utiliser un même moule pour une pluralité d'écrans différents.

Dans un mode de réalisation, on prévoit que la diminution de la température de la composition rhéoépaississante est artificielle, le procédé comprenant une étape d'échange thermique avec un fluide dont la température est inférieure à la température ambiante.

Ce qui permet d'augmenter la vitesse d'augmentation de la viscosité de la composition rhéoépaississante, et notamment de créer un bouchon avant que la pression interne soit égale à la pression atmosphérique. Ce qui permet de découper une lampe en deux points de coupe, simultanément ou non.

Dans un mode de réalisation, on prévoit en outre une étape consistant à découper la composition rhéoépaississante après solidification de celle-ci.

Ce qui permet par exemple de limiter les risques de casse de l'enveloppe lors du retrait.

De préférence, on prévoit une étape préalable consistant à chauffer la composition rhéoépaississante à une température initiale (Ti) au-delà d'une température seuil (Ts), supérieure à la température ambiante, la température seuil (Ts) étant supérieure ou égale au point d'écoulement de la composition rhéoépaississante, le point d'écoulement de la composition rhéoépaississante étant supérieur à la température ambiante.

Ce qui permet d'obtenir pour l'étape de découpe une composition rhéoépaississante liquide ou pâteuse dont la viscosité est inférieure à la viscosité de la composition rhéoépaississante lors de l'étape de séparation. La composition rhéoépaississante peut donc être aspirée dans chaque morceau découpé et y créer un bouchon en refroidissant.

D'autres caractéristiques et avantages de la présente invention apparaîtront plus clairement à la lecture de la description suivante donnée à titre d'exemple illustratif et non limitatif et faite en référence aux figures annexées dans lesquelles :

### Brève description des figures

- La figure 1A illustre un mode de réalisation d'un moule selon l'invention en vue écaltée de trois quarts, par dessus,
- La figure 1B illustre un plan de symétrie P pour le moule de la figure 1A,
- La figure 2A illustre une coupe transversale d'un écran plat comprenant deux plots de composition rhéoépaississante,
- La figure 2B illustre l'aspiration de la composition rhéoépaississante dans une lampe de l'écran de la figure 2A après découpe en deux points de coupe, ,
- La figure 3 illustre un mode de réalisation d'une pince équipée d'au moins trois roues selon l'invention,
- La figure 4 illustre un mode de réalisation du procédé selon l'invention dont les pointillés traduisent un caractère optionnel,
- La figure 5A illustre les lampes d'un écran plat vu de face
- La figure 5B illustre la découpe des lampes de l'écran de la figure 5A, selon les pointillés de la figure 5A et
- La figure 5C illustre la découpe de l'écran de la figure 5B, selon les pointillés de la figure 5B .

### Description de l'invention

L'invention prévoit de découper 120 une lampe 21 en au moins un point de coupe 26A, 26B, et créer un premier morceau 211 et un deuxième morceau 212 de part et d'autre de chaque point de coupe.

Or, une lampe au sens de l'invention comprend un polluant, typiquement du mercure. Si on porte atteinte à l'intégrité de la lampe, celui-ci risque de se déverser dans l'atmosphère ou sur les éléments ou composants à proximité de la lampe, ce qui peut complexifier voire compromettre la valorisation des fractions recyclables, en particulier dans le cadre de démantèlement d'un écran plat en fin de vie.

En outre, dans un écran plat 20, les connecteurs 24A, 24B qui relient les lampes à l'écran sont généralement inaccessibles après retrait de la dalle et des éventuels filtres diffuseurs car ils sont encore cachés par une plaquette 23A, 23B.

Le retrait de la plaquette peut être complexe et peut risquer de porter atteinte à l'intégrité des lampes de manière non maitrisée.

Cependant, la pression interne des lampes est inférieure à la pression atmosphérique. La présente invention vise à utiliser judicieusement cette caractéristique.

A cet effet, on prévoit d'immerger 110 le point de coupe dans une composition rhéoépaississante 22 préalablement à l'étape de découpe, et de le maintenir dans cette composition rhéoépaississante pendant l'étape de découpe 120, de préférence jusqu'à ce que la viscosité de celle-ci soit telle qu'elle forme un bouchon hermétique à l'extrémité de chaque morceau de lampe.

Une composition rhéoépaississante est une composition chimique dont la viscosité diminue avec l'augmentation de la température et réciproquement.

On peut prévoir par exemple comme composition rhéoépaississante une composition chimique comprenant l'un au moins des éléments parmi l'ensemble comprenant une solution colloïdale, par exemple de l'amidon réhydraté, un corps gras, de la cire, une graisse ou une huile d'origine minérale, végétale ou animale, un hydrocarbure, et en particulier une paraffine, une résine, voire une colle

Avant la découpe 120, la composition rhéoépaississante est liquide ou pâteuse. Par exemple on prévoit une étape préalable consistant à chauffer ladite composition à une température initiale Ti au-delà d'une température seuil Ts, supérieure à la température ambiante. De préférence, la température seuil Ts est supérieure ou égale au point d'écoulement de la composition rhéoépaississante, le point d'écoulement d'un produit étant la température à laquelle celui-ci commence à s'écouler, le point d'écoulement de la composition rhéoépaississante étant supérieur à la température ambiante.

Au moment de la découpe, la température de la composition rhéoépaississante est de préférence sensiblement identique à la température initiale.

Comme il règne à l'intérieur de la lampe une pression inférieure à la pression atmosphérique, généralement de l'ordre de 100 mBar, lorsque l'enveloppe est découpée, l'équilibre des pressions génère naturellement un phénomène d'aspiration 130 dans l'enveloppe par le point de découpe. Ainsi, comme le point de découpe est immergé dans la composition rhéoépaississante et que celle-ci présente une température supérieure à son point d'écoulement, donc une viscosité suffisamment faible pour être aspirée, la composition rhéoépaississante 22 est naturellement aspirée dans chaque morceau de lampe 211, 212, 213 au moment de la découpe.

Plus la viscosité de la composition rhéoépaississante est faible et plus elle est aspiré vite par la lampe lors de la découpe. A l'inverse, plus la viscosité est élevée et plus le temps d'aspiration est long. Pendant ce délai, on peut donc effectuer une autre découpe sur la même lampe (aux restrictions évoquées ci-dessous) ou sur une autre lampe.

Après la découpe, la température de la composition rhéoépaississante est diminuée 140.

La diminution de la température de la composition rhéoépaississante peut être naturelle, par échange thermique avec l'air ambiant. Il suffit d'attendre que la température de la composition rhéoépaississante se rapproche de la température ambiante. La diminution de la température de la composition rhéoépaississante peut être artificielle, par exemple par échange thermique avec un fluide, en particulier un gaz, dont la température est inférieure à la température ambiante. A cet effet, on peut prévoir une buse d'éjection de gaz. On peut prévoir que le gaz soit de l'air.

La diminution de la température de la composition rhéoépaississante augmente la viscosité de celle-ci, sa viscosité à température ambiante est supérieure à sa viscosité à température initiale. A température ambiante, la composition rhéoépaississante est solide ou pâteuse. Comme le point d'écoulement est supérieur à la température ambiante, la composition rhéoépaississante ne s'écoule plus à température ambiante et forme alors un bouchon à l'extrémité de chaque morceau de lampe. De préférence, le bouchon est étanche au polluant, en l'espèce au mercure gazeux.

Pendant l'étape 140 de refroidissement de la composition rhéoépaississante après la découpe 120 d'un point de coupe d'une lampe, on peut mettre en oeuvre les étapes d'immersion et de découpe sur un autre point de coupe, sur la même lampe ou sur une autre lampe. De préférence, on prévoit par lampe au moins un point coupe par connecteur. Pour le démantèlement d'un écran plat en fin de vie, on peut prévoir deux points de coupe 26A, 26B par lampe.

Dans le cas où une lampe comprend un premier 26A et un deuxième 26B point de coupe, on peut prévoir que les deux découpes aient lieu simultanément ou quasi simultanément. On peut également prévoir que les deux découpes aient lieu consécutivement. La découpe au niveau du deuxième point de coupe 26B doit avoir lieu tant que la pression dans la lampe est inférieure à la pression atmosphérique, c'est-à-dire suffisante pour aspirer une partie de la composition rhéoépaississante au niveau dudit deuxième point coupe 26B.

On peut prévoir que la découpe au niveau du deuxième point de coupe26B ait lieu avant que l'aspiration de la composition rhéoépaississante au niveau du premier point coupe 26A ne soit terminée.

On peut par exemple diminuer artificiellement, et de préférence rapidement, la température de la composition rhéoépaississante au niveau du premier point de coupe 26A à brève échéance après que l'aspiration ait commencé. L'augmentation de la viscosité, voire la solidification, augmente les forces de frottement de la composition rhéoépaississante sur les parois internes de l'enveloppe de la lampe. Lorsque les forces de frottement sont supérieures à la pression interne de la lampe, l'aspiration au premier point de coupe 26A s'arrête. La pression interne de la lampe peut ainsi rester inférieure à la pression atmosphérique, ce qui permet d'aspirer ultérieurement une partie de la composition rhéoépaississante au niveau du deuxième point coupe 26B.

En cas de pluralité de lampes 21 à découper, on peut prévoir d'immerger plusieurs points coupe simultanément ou en série, et de les découper simultanément (en parallèle), ou séquentiellement (en série). De même, on peut prévoir d'immerger un premier point de coupe puis de découper un deuxième point de coupe immergé, puis de découper le premier point de coupe immergé, etc. L'ordre d'immersion, de découpe et de séparation des morceaux de lampes entre plusieurs lampes peut être quelconque tant que l'immersion d'un point de coupe donné est faite avant la découpe au niveau de celui-ci. De préférence, l'ordre dépend de la configuration de l'écran plat et de la composition rhéoépaississante, par exemple en fonction de sa vitesse de changement de viscosité en fonction de la température.

### Découpe

La découpe d'une lampe au niveau de chaque point de coupe peut être effectuée par tout moyen de découpe ou d'écrasement ponctuel à froid, par exemple une pince, un couteau, une scie, une cisaille. De préférence, on évite les outils qui risquent d'éjecter la composition rhéoépaississante tels qu'une disqueuse ou des buses à air/gaz.

Comme le point de coupe est immergé et que l'outil de découpe traverse la composition rhéoépaississante 22 pour la découpe 120, la composition rhéoépaississante emprisonne avantageusement les morceaux de verre une fois la découpe effectuée, ce qui permet un traitement ultérieur des débris de verre, susceptibles d'ailleurs de comprendre le(s) polluant(s).

Pour immerger un point de coupe, la composition rhéoépaississante est posée sur un support, par exemple sur le fond 25 de l'écran plat en cours de démantèlement ou un support *ad hoc.* Elle peut être également posée dans un moule 10, dont le fond peut éventuellement être constitué du fond de l'écran plat en cours de démantèlement. De préférence, il existe une distance entre le support ou le fond du moule et le point le plus proche de l'enveloppe de la lampe au niveau du point de coupe.

### Moule

Pour l'étape d'immersion 110, on peut prévoir de couler ou injecter la composition rhéoépaississante dans un moule 10 afin de mouler 100 ladite composition. On peut prévoir indifféremment de disposer d'abord le point de coupe dans le moule puis de l'immerger, ou de couler/injecter d'abord la composition rhéoépaississante dans le moule puis d'y immerger le point de coupe.

On peut prévoir de retirer le moule avant la découpe 120 ou que la découpe ait lieu dans le moule, par exemple en fonction de la viscosité de la composition rhéoépaississante.

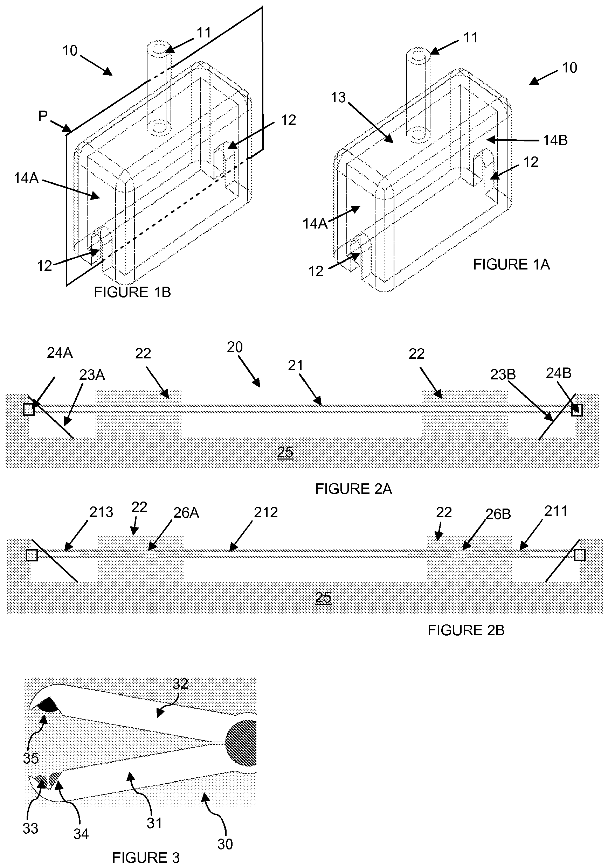

Le moule 10 comprend au moins une ouverture 11 pour que la composition rhéoépaississante puisse être injectée/coulée et une ouverture -éventuellement la même- pour que l'air ambiant chassé par la composition rhéoépaississante puisse s'échapper, par exemple sous forme de conduit comme illustré figure 1A et figure 1B. On peut prévoir une autre ouverture (non illustrée), éventuellement identique, pour chasser l'air ambiant. On peut également prévoir de supprimer la face supérieure 13 du moule 10. Celui-ci est donc ouvert sur le dessus, ce qui peut constituer l'ouverture 11.

Le moule 10 comprend au moins deux faces 14A, 14B se faisant face, de préférence parallèles et de préférence verticales, chacune de ces faces comprenant une ouverture 12 dont la forme épouse au moins partiellement la forme de l'enveloppe de la lampe au niveau du point de coupe. Pour une lampe tubulaire, on prévoit de préférence une ouverture au moins partiellement circulaire.

On peut prévoir un moule unitaire. De préférence, l'ouverture 12 est en forme de U, de sorte que l'enveloppe de la lampe puisse y être insérée, de préférence radialement.

On peut prévoir un moule composé de deux demi moules articulés. Chaque demi moule présente une ouverture, en forme de demi U ou de demi disque, configurée pour épouser la forme de l'enveloppe. De préférence, les deux demi moules sont articulés de sorte à ce que chaque demi moule est amené en ouverture/fermeture radialement à l'enveloppe de la lampe. Un tel moule est partiellement illustré figure 1B. La figure 1 B représente la moule de la figure 1A découpé en deux demi moules selon le plan P, en l'espèce un plan de symétrie. Les deux demi moules sont articulés, par des moyens non illustrés, entre une position d'ouverture où les deux demi moules sont à distance l'un de l'autre et une position de fermeture où les deux demi moules sont au contact l'un de l'autre.

Le moule 10 peut comprendre un fond ou non. Par exemple, avec un moule sans fond (figure 1A), utilisant éventuellement le fond 25 de l'écran comme fond de moule, et présentant une ouverture en forme de U, l'avantage est que le même moule peut être utilisé pour tous les écrans dont la hauteur entre une lampe et le fond de l'écran est inférieure à la dimension des branches du U.

Dans le cas où le moule ne comprend pas de fond, ou lorsque la composition rhéoépaississante est déposée directement sur le fond de l'écran, on utilise avantageusement une composition rhéoépaississante à faible pouvoir adhésif, par exemple à base d'une paraffine, ce qui facilite son retrait ultérieur, en particulier si elle se solidifie.

On peut prévoir en outre qu'un outil de découpe soit solidaire du moule.

### Séparation

Une fois la lampe découpée en au moins deux morceaux, on prévoit de séparer 160 le premier morceau 211 du deuxième morceau 212.

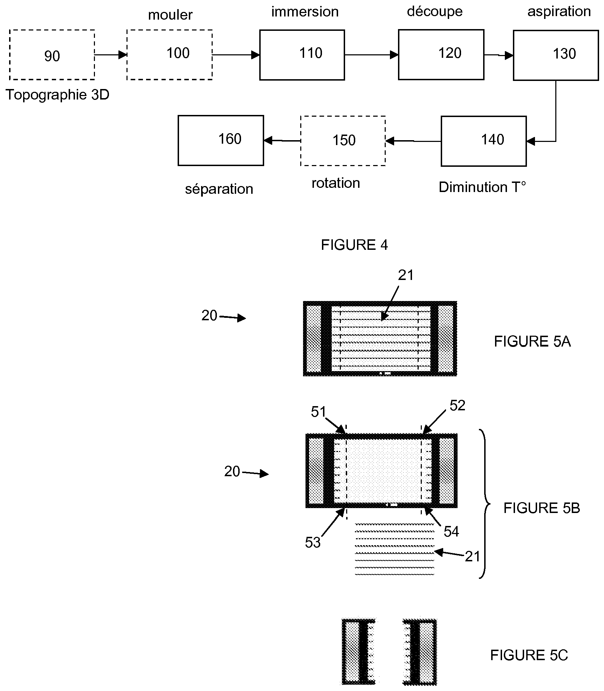

Par exemple, voir figure 5A, pour un écran plat en fin de vie, certaines lampes sont rectilignes, et comprennent un connecteur à chaque extrémité, chaque connecteur de la lampe étant connecté à un connecteur 24A, 24B correspondant, solidaire de l'écran. Comme évoqué précédemment, ces connecteurs 24A, 24B sont généralement cachés derrière une plaquette.

Dans ce cas notamment, on peut prévoir de découper la lampe en deux points de coupe 26A, 26B, chaque point de coupe étant directement accessible, c'est-à-dire non caché par une plaquette, et de préférence proche de la plaquette cachant le connecteur de la lampe, pour toutes les lampes 21 de l'écran 20. Les pointillés sur la figure 5A représente les lignes de coupe des lampes 21 pour un écran plat 20.

On prévoit alors de séparer 160 le morceau central 212 des deux morceaux extrêmes 211, 213. Chaque morceau extrême peut rester temporairement solidaire de l'écran par l'intermédiaire des connecteurs 26A, 26B. Mais l'accès à ceux-ci comme à la plaquette s'en trouve facilité. La séparation du morceau central peut se faire manuellement ou mécaniquement, par exemple par un outil standard de préhension, telle qu'une pince mécanique. De préférence, les doigts de l'outil de préhension sont équipés d'une surface amortisseuse ou molle (mousse, caoutchouc, ...) pour absorber une partie des efforts de serrage et ne pas casser la lampe CCFL.

Après la séparation, c'est-à-dire le retrait de la partie centrale 212 des lampes, on peut prévoir de découper les bords de l'écran à proximité des morceaux de lampes restant, de préférence perpendiculairement au sens de l'axe d'élongation des lampes comme illustré figure 5B, ou parallèlement à celui-ci. Sur la figure 5B, les pointillés représente des lignes de coupe de l'écran en une pluralité de points de coupe de l'écran 51, 52, 53, 54.

On peut alors récupérer les morceaux de l'écran coupé (figure 5C), chaque morceau d'écran comprenant une extrémité de lampe connectée à un connecteur. On peut alors désassembler ces morceaux d'écrans beaucoup plus facilement, par exemple par un opérateur.

Dans un mode de réalisation optionnel, on prévoit une pince 30 équipée d'au moins trois roues 33, 34, 35, dont une au moins peut être motorisée, c'est-à-dire commandée en rotation. La pince comprend deux branches 31, 32, chaque branche portant au moins une roue. Les roues sont configurées pour être en contact avec l'enveloppe de la lampe lorsque la pince est fermée, de sorte que lorsque la pince est activée, on peut mettre en oeuvre une étape de rotation 150 de la partie centrale d'une lampe autour de son axe d'élongation après découpe en deux points de coupe.

De préférence, pendant l'étape de séparation la composition rhéoépaississante est pâteuse, ce qui permet une séparation par exemple par cisaillement. Si la composition rhéoépaississante est solidifiée, on peut également prévoir un cisaillement ou une étape de découpe de celle-ci. La découpe de la composition rhéoépaississante peut être faite par le même outil de découpe que celui utilisé pour la lampe, ou par un autre outil. On peut également prévoir une séparation par effort mécanique, par exemple en tirant sur la lampe, manuellement ou avec un outil, par exemple une pince, y compris une pince équipée d'au moins trois roues évoquée ci-dessus.

### Profilométrie laser

Dans un mode de réalisation, on prévoit une étape 90 consistant à obtenir la topographie (tridimensionnelle), c'est-à-dire la position, l'orientation dans l'espace et les dimensions d'une partie au moins des lampes.

A cet effet, on peut prévoir une étape de profilométrie laser, comme décrit par exemple dans la demande WO2012150422 précitée.

Dans le cas du démantèlement d'un écran plat, la profilométrie laser permet également de définir la position, l'orientation dans l'espace et les dimensions de la ou des plaquette(s) et d'une partie au moins de tout élément de l'écran autre que les lampes, de préférence dans le prolongement de celles-ci, par exemple le carter.

Pour la profilométrie laser, un laser projette un faisceau plan dont il résulte un trait de lumière, par exemple sur une zone de la plaquette et des lampes. Le laser est incliné d'un angle α donné, par exemple de 30° à 45°, par rapport à l'axe optique d'une caméra qui scrute une zone où le trait laser est projeté en réflexion, de manière à imager les déformations du trait dues au relief, c'est-à-dire à la géométrie du fond de l'écran, en l'espèce des lampes, de la plaquette ou tout autre élément de l'écran illuminé par le trait de lumière. De préférence, l'axe optique de la caméra ou le plan laser est orthogonal au fond plat.

Le mouvement de la caméra est solidaire du mouvement du laser, par exemple en étant portés tous deux par un bras robotisé (non illustré). Ce bras permet de produire un mouvement de translation (balayage) de l'ensemble caméra-laser notamment parallèlement et/ou perpendiculairement à la direction des lampes. Sur chaque image de la caméra, une ligne plus ou moins discontinue est observable. Cette ligne appelée profil représente la déformation du trait laser sur le relief illuminé par le trait de lumière.

Le traitement des images du profil par des algorithmes connus permet de calculer, par exemple dans le repère du robot supportant le bras robotisé, les coordonnées des éléments de relief rencontrés par le faisceau laser, donc la position, l'orientation dans l'espace et les dimensions des lampes, des éventuelles plaquettes, carter, etc.

## Revendications

1. Procédé de découpe à froid d'une lampe (21) dont la pression interne est inférieure à la pression atmosphérique, comprenant une enveloppe, au moins un connecteur solidaire de l'enveloppe, et renfermant un polluant,
Le procédé comprenant des étapes consistant à :
- Maintenir la lampe dans une position de découpe prédéterminée, et
- Découper (120) l'enveloppe en au moins un point de coupe (26A, 26B), et créer un premier morceau (211) et un deuxième morceau (212) de part et d'autre de chaque point de coupe,
- Préalablement à l'étape de découpe, immerger (110) le point de coupe (26A, 26B) dans une composition liquide ou pâteuse,
- Maintenir le point de coupe immergé dans la composition liquide ou pâteuse pendant l'étape de découpe,
- Aspirer (130) une partie de la composition liquide ou pâteuse dans chaque morceau (211, 212, 213),
**Caractérisé en ce que**
- la composition liquide ou pâteuse est une composition rhéoépaississante (22) dont la température, préalablement à l'étape de découpe, est supérieure ou égale à son point d'écoulement
et **caractérisé en ce qu'**il comprend en outre une étape consistant à :
- Ultérieurement à l'étape de découpe, diminuer la température de la composition rhéoépaississante (140) jusqu'à une température inférieure à son point d'écoulement, de sorte à augmenter sa viscosité et créer un bouchon étanche au polluant.

2. Procédé de découpe selon la revendication 1, comprenant en outre une étape (160) consistant à séparer le premier morceau (211) du deuxième morceau (212).

3. Procédé de découpe selon la revendication 2, dans lequel la lampe est découpée en deux points de coupe de sorte à créer une partie centrale de la lampe et deux parties extrêmes, le procédé comprenant en outre, après l'étape de découpe en deux points de coupe, une étape consistant à retirer la partie centrale.

4. Procédé de découpe selon la revendication 3, dans lequel la lampe (21) est une lampe de rétroéclairage d'un écran plat (20) en fin de vie, la lampe (21) étant solidaire de l'écran par l'intermédiaire de connecteurs (24A, 24B), le procédé comprenant, après retrait de la partie centrale, une étape consistant à découper l'écran en une pluralité de points de coupe (51, 52, 53, 54).

5. Procédé selon l'une quelconque des revendications 3 ou 4, comprenant en outre une étape (150) consistant à mettre rotation la partie centrale de la lampe (212) autour de son axe d'élongation.

6. Procédé selon l'une quelconque des revendications précédentes, comprenant une étape (90) consistant à obtenir la topographie tridimensionnelle d'une partie au moins des lampes.

7. Procédé selon la revendication 6, comprenant, avant l'étape (120) de découpe de l'enveloppe, une étape (100) consistant à couler, injecter ou mouler la composition rhéoépaississante dans un moule.

8. Procédé selon l'une quelconque des revendications précédentes, dans lequel la diminution de la température de la composition rhéoépaississante est artificielle, le procédé comprenant une étape d'échange thermique avec un fluide dont la température est inférieure à la température ambiante.

9. Procédé selon l'une quelconque des revendications précédentes, comprenant en outre une étape consistant à découper la composition rhéoépaississante après solidification de celle-ci.

10. Procédé selon l'une quelconque des revendications précédentes, comprenant une étape préalable consistant à chauffer la composition rhéoépaississante à une température initiale (Ti) au-delà d'une température seuil (Ts), supérieure à la température ambiante, la température seuil (Ts) étant supérieure ou égale au point d'écoulement de la composition rhéoépaississante, le point d'écoulement de la composition rhéoépaississante étant supérieur à la température ambiante.

## Patentansprüche

1. Verfahren zum Kaltschneiden einer Lampe (21), deren Innendruck kleiner als der Atmosphärendruck ist, die eine Hülle umfasst, mindestens einen Verbinder, der fest mit der Hülle verbunden ist, und einen Schadstoff enthält,
wobei das Verfahren Schritte umfasst, die darin bestehen:
- die Lampe in einer vorbestimmten Schneidstellung zu halten, und
- die Hülle an mindestens einer Schneidstelle (26A, 26B) aufzuschneiden (120) und ein erstes Stück (211) und ein zweites Stück (212) beidseits von jeder Schneidstelle zu erzeugen,
- vor dem Schritt des Aufschneidens die Schneidstelle (26A, 26B) in eine flüssige oder pastöse Zusammensetzung einzutauchen (110),
- die Schneidstelle während des Schritts des Aufschneidens in der flüssigen oder pastösen Zusammensetzung eingetaucht zu halten,
- einen Teil der flüssigen oder pastösen Zusammensetzung in jedes Stück (211, 212, 213) einzusaugen (130),
**dadurch gekennzeichnet, dass**
- die flüssige oder pastöse Zusammensetzung eine dilatante Zusammensetzung (22) ist, deren Temperatur vor dem Schritt des Aufschneidens größer oder gleich ihrer Fließtemperatur ist
und **dadurch gekennzeichnet, dass** es weiter einen Schritt umfasst, der darin besteht:
- nach dem Schritt des Aufschneidens die Temperatur der dilatanten Zusammensetzung (140) bis auf eine Temperatur kleiner ihrem Fließpunkt zu verringern, sodass ihre Viskosität erhöht und ein für den Schadstoff dichter Stopfen erzeugt wird.

2. Schneidverfahren nach Anspruch 1, weiter einen Schritt (160) umfassend, der darin besteht, das erste Stück (211) von dem zweiten Stück (212) zu trennen.

3. Schneidverfahren nach Anspruch 2, bei dem die Lampe an zwei Schneidstellen aufgeschnitten wird, sodass ein mittlerer Teil der Lampe und zwei äußere Teile erzeugt werden, wobei das Verfahren nach dem Schritt des Aufschneidens an zwei Schneidstellen weiter einen Schritt umfasst, der darin besteht, den mittleren Teil zu entfernen.

4. Schneidverfahren nach Anspruch 3, bei dem die Lampe (21) eine Hintergrundbeleuchtungslampe eines ausgedienten Flachbildschirms (20) ist, wobei die Lampe (21) mittels Verbindern (24A, 24B) fest mit dem Bildschirm verbunden ist, wobei das Verfahren nach Entfernen des mittleren Teils einen Schritt umfasst, der darin besteht, den Bildschirm an einer Vielzahl von Schneidstellen (51, 52, 53, 54) aufzuschneiden.

5. Verfahren nach einem der Ansprüche 3 oder 4, weiter einen Schritt (150) umfassend, der darin besteht, den mittleren Teil der Lampe (212) um seine Elongationsachse in Drehung zu versetzen.

6. Verfahren nach einem der vorstehenden Ansprüche, umfassend einen Schritt (90), der darin besteht, die dreidimensionale Topographie mindestens eines Teils der Lampen zu erhalten.

7. Verfahren nach Anspruch 6, vor dem Schritt (120) des Aufschneidens der Hülle einen Schritt (100) umfassend, der darin besteht, die dilatante Zusammensetzung in eine Form zu schütten, zu injizieren oder zu gießen.

8. Verfahren nach einem der vorstehenden Ansprüche, bei dem das Verringern der Temperatur der dilatanten Zusammensetzung künstlich ist, wobei das Verfahren einen Schritt des Wärmeaustausches mit einem Fluid umfasst, dessen Temperatur kleiner als die Umgebungstemperatur ist.

9. Verfahren nach einem der vorstehenden Ansprüche, weiter einen Schritt umfassend, der darin besteht, die dilatante Zusammensetzung nach Verfestigung derselben aufzuschneiden.

10. Verfahren nach einem der vorstehenden Ansprüche, umfassend einen vorhergehenden Schritt, der darin besteht, die dilatante Zusammensetzung auf eine Anfangstemperatur (Ti) über eine Schwellentemperatur (Ts) hinaus zu erhitzen, die größer als die Umgebungstemperatur ist, wobei die Schwellentemperatur (Ts) größer oder gleich dem Fließpunkt der dilatanten Zusammensetzung ist, wobei der Fließpunkt der dilatanten Zusammensetzung größer als die Umgebungstemperatur ist.

## Claims

1. A method for cold cutting a lamp (21) that has an inner pressure lower than atmospheric pressure, an envelope, at least one connector secured to the envelope, and contains a pollutant, the method comprising the following steps:
- Maintaining the lamp in a predetermined cutting position, and
- Cutting (120) the envelope into at least one cut point (26A, 26B) and creating a first piece (211) and a second piece (212) on either side of each cut point,
- Prior to the cutting step, immersing (110) the cut point (26A, 26B) in a liquid or pasty composition,
- Maintaining the cut point immersed in the liquid or pasty composition during the cutting step,
- Suctioning (130) part of the liquid or pasty composition in each piece (211, 212, 213),
**characterised in that**:
- the liquid or pasty composition is a shear-thickening composition (22) for which the temperature prior to the cutting step is higher than or equal to its pour point,
and **characterised in that** it further comprises a step consisting of:
- Subsequent to the cutting step, decreasing the temperature of the shear-thickening composition in step (140) to a temperature lower thant its pour point, so as to increase its viscosity and to create a sealed stopper to the pollutant

2. The cutting method according to claim 1, further comprising a step (160) consisting of separating the first piece (211) from the second piece (212).

3. The cutting method according to claim 2, in which the lamp is cut into two cut points to create a central part of the lamp and two end parts and the method further comprises after the step of cutting step into two cut points, removing the central part.

4. The cutting method according to claim 3, in which the lamp (21) is a backlight lamp of a flat screen (20) at end-of-life, the lamp (21) being secured to the screen by means of connectors (24A, 24B), and the method comprising, after removing the central part, cutting the screen at a plurality of cut points (51, 52, 53, 54).

5. The method according to either claim 3 or 4, further comprising rotating (150) the central part of the lamp (212) around its elongation axis.

6. The method according to any one of the previous claims, further comprising the three-dimensional topography of at least part of the lamp.

7. The method according to claim 6, further comprising, prior to step of cutting the envelope, pouring, injecting or molding the shear-thickening composition into a mold.

8. The method according to any one of the previous claims, further comprising thermal exchange with a fluid that has a temperature lower than ambient temperature to decrease the temperature of the shear-thickening composition to obtain an artificial shear-thickening composition.

9. The method according to any one of the previous claims, further comprising cutting the shear-thickening composition after solidification of the latter.

10. The method according to any one of the previous claims, comprising heating the shear-thickening composition at an initial temperature (Ti) beyond a threshold temperature (Ts), that is higher than an ambient temperature, the threshold temperature (Ts) being higher than or equal to the pour point of the shear-thickening composition, the pour point of the shear-thickening composition being higher than the ambient temperature.
